Europäisches Patentamt

European Patent Office

Office européen des brevets

(11) Numéro de publication : **0 378 939 B1**

(12)

# FASCICULE DE BREVET EUROPEEN

(45) Date de publication du fascicule du brevet :
**28.10.92 Bulletin 92/44**

(51) Int. Cl.⁵ : **F16C 19/52**

(21) Numéro de dépôt : **89403502.1**

(22) Date de dépôt : **15.12.89**

(54) **Joint d'étanchéité tournant à codeur magnétique intégré, notamment pour des roulements à capteurs d'informations.**

(30) Priorité : **20.01.89 FR 8900649**
**21.04.89 FR 8905313**

(43) Date de publication de la demande :
**25.07.90 Bulletin 90/30**

(45) Mention de la délivrance du brevet :
**28.10.92 Bulletin 92/44**

(84) Etats contractants désignés :
**DE ES GB IT SE**

(56) Documents cités :
**EP-A- 0 250 275**
**DE-A- 2 756 930**
**FR-A- 2 558 223**
**FR-A- 2 574 501**

(73) Titulaire : **S.N.R. ROULEMENTS**
**Boîte Postale 17 1, rue des Usines**
**F-74010 Annecy Cédex (FR)**

(72) Inventeur : **Alff, Denis**
**22, Rue Filaterie**
**F-74000 Annecy (FR)**

(74) Mandataire : **Ernst-Schonberg, Michel**
**8/10, avenue Emile Zola**
**F-92109 Boulogne Billancourt (FR)**

EP 0 378 939 B1

## Description

L'invention concerne un joint d'étanchéité tournant à codeur magnétique intégré, notamment pour des roulements à capteurs d'informations du type comportant une garniture à lèvres d'étanchéité, disposée entre deux anneaux respectivement munis d'une portée cylindrique de montage auxquels sont solidarisés des éléments capteur et codeur.

On connaît par la publication FR-B 2558223 un roulement conforme au préambule de la revendication dans lequel le capteur d'informations constitué par des éléments capteur fixe et codeur tournant est intégré à une garniture d'étanchéité. Lorsque l'élément codeur est constitué par un anneau magnétique, il est connu de le monter dans un support spécifique coaxial à la bague tournante du roulement dans le but de conserver la précision d'information souhaitée. Par contre, lorsque l'élément codeur est réalisé dans une matière moulable telle qu'une plastoferrite, le montage et la fixation de celui-ci peut s'avérer délicat et diffcilement industrialisable, ses propriétés physiques et mécaniques étant peu compatibles avec un environnement acier.

La publication DE-A-2756930 décrit un élément codeur constitué par une couronne dentée à section en L à ailes axiale et radiale dans lequel l'aile axiale assure le maintien du codeur avec l'élément d'étanchéité tandis que l'aile radiale porte une denture de codage.

L'invention a pour objet un joint d'étanchéité tournant conforme à la caractéristique de la revendication dans lequel l'élément codeur moulé est encastré dans la garniture d'étanchéité et est contenu entre deux anneaux dont l'un porte ladite garniture et dont l'autre porte l'élément capteur.

Les moyens de retenue ainsi réalisés ont une grande résistance aux chocs et vibrations et admettent les variations dimensionnelles relatives du codeur par rapport à l'environnement sous l'effet de dilatations différentielles.

Le joint d'étanchéité ainsi réalisé permet également d'isoler l'ensemble du capteur d'informations avec son codeur des agents polluants ou agressifs à l'extérieur ou à l'intérieur du roulement, tout en simplifiant le montage de l'élément codeur dans le joint d'étanchéité.

D'autres caractéristiques et avantages de l'invention apparaîtront à la lecture d'exemples de réalisation de celle-ci en référence au dessin annexé dans lequel :

La figure 1 est une vue en coupe axiale d'une partie du roulement isolé par un joint d'étanchéité disposé entre une bague intérieure tournante et une bague extérieure fixe,

-La figure 2 est une vue en coupe axiale d'une partie du roulement isolé par un joint d'étanchéité disposé entre une bague intérieure fixe et une bague extérieure tournante,

-Les figures 3 et 4 se rapportent à des applications du joint d'étanchéité aux roulements de roues non motrices d'un véhicule,

-Les figures 5 et 6 décrivent les éléments codeurs des joints d'étanchéité représentés aux figures 1 et 2.

Les roulements représentés aux différentes figures possèdent une bague extérieure 1 et une bague intérieure 2 susceptibles d'être, au choix, fixe ou tournante en fonction du montage utilisé. Les bagues 1 et 2 possèdent des chemins de roulement pour des corps roulants 3 disposés dans une cage 4 qui en assure la retenue et le positionnement angulaire.

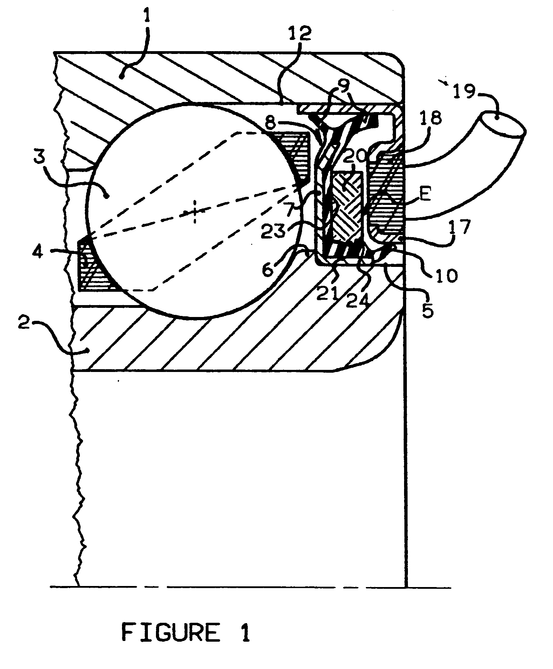

Selon la figure 1, la bague 2 tournante possède une portée 5 limitée axialement par un décrochement 6 qui assure la butée de l'anneau 7 du joint d'étanchéité. Sur l'anneau 7 est surmoulée la garniture d'étanchéité 8 dont les lèvres radiales 9, 10 sont respectivement en appui sur l'anneau 17 monté sur la portée 12 de la bague extérieure fixe 1.

L'élément capteur 18 est ici encastré dans une dépression formée sur la face externe de l'anneau 17 et un câble 19 assure la transmission des informations émises vers un circuit de traitement non représenté.

L'élément codeur 20 est monté sur la garniture 8 entre ladite garniture et l'élément capteur 18 à une distance E de ce dernier compatible à la transmission correcte des signaux.

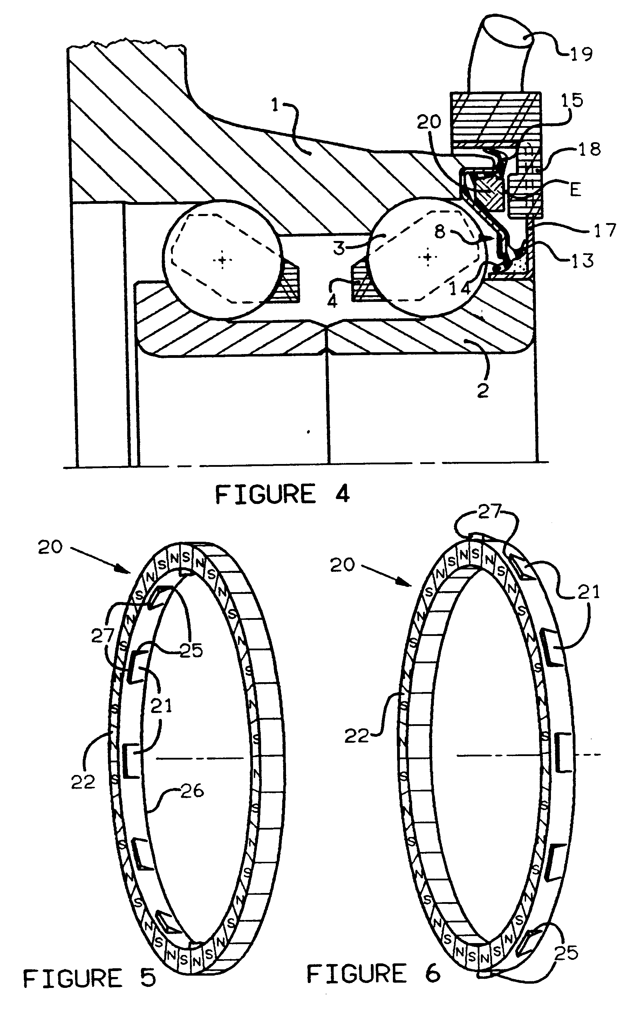

Conformément à l'invention, l'élément codeur 20 possède une surface de butée 26 s'étendant radialement et des ergots ou des dents 21 visibles à la figure 5, à flancs radiaux 25 et 27 et à flanc incliné. Les ergots sont répartis circonférentiellement à l'intérieur d'un anneau aimanté 22 multipolaire constitutif de l'élément codeur. L'immobilisation et le positionnement axial de l'anneau 22 sont réalisés dans un sens par une surface de butée 23, s'étendant radialement, portée par le côté interne de la garniture 8. La retenue dans l'autre sens et le maintien angulaire et radial sont assurés par lesdits ergots 21 implantés élastiquement dans la portée cylindrique 24 de la garniture 8 à l'aide des flancs radiaux 25 et 27 de ces ergots 21, les flancs radiaux 25, 27 étant axialement éloignés des dites surfaces de butée 23, 26.

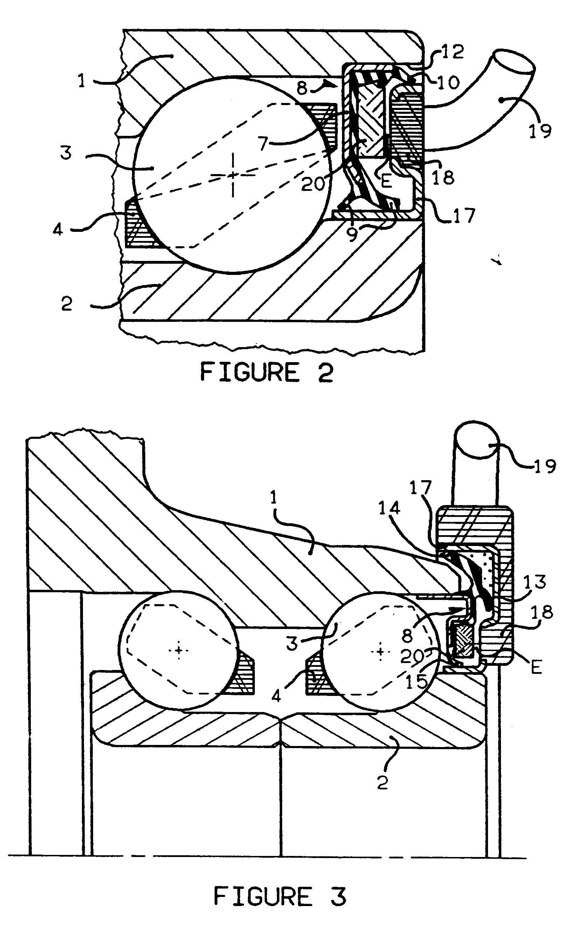

La figure 2 représente une variante de montage du joint d'étanchéité sur un roulement dont la bague extérieure est tournante. Sur cette figure, les éléments et organes homologues à ceux de la figure 1 portent les mêmes références. La bague extérieure 1 possède ainsi la portée 12 de réception de l'anneau 7 porteur de la garniture 8 et de l'élément codeur 20. Ainsi que cela est représenté à la figure 6, les dents 21 de retenue de l'élément codeur dans la garniture 8 sont réparties circonférentiellement à la périphérie de l'anneau 22.

L'anneau 22 porteur des dents ou ergots 21 est implanté dans chacun des exemples décrits au cours du montage du joint d'étanchéité. A cet effet, l'anneau 22 peut être emmanché à force dans la garniture 8. Afin d'éviter d'endommager la garniture, il est possible d'assurer ce montage par rétraction ou dilatation thermique de l'anneau 22 lorsque celui-ci est réalisé dans une matière plastoferrite à fort coefficient de dilatation.

Le positionnement axial de l'anneau est ainsi parfaitement réalisé par la surface 23 de la garniture et celui-ci ne peut être déplacé axialement ou angulairement par suite de la pénétration des ergots ou dents 21 dans la portée cylindrique 24.

Les figures 3 et 4 se rapportent à des variantes d'applications de l'invention aux roulements de roues non motrices d'un véhicule. Dans ce cas, le roulement à deux rangées de corps roulants 3 possède un ensemble de bagues intérieures 2 fixes et une bague extérieure 1 tournante. L'élément capteur 18 et son câble 19 sont surmoulés sur l'anneau 17 (figure 3) ou retenus par accrochage (figure 4). Dans ce dernier cas, l'élément capteur peut être fixé après le montage du roulement.

L'élément codeur 20 est fixé sur la garniture d'étanchéité 8 ainsi que cela a été décrit en référence des figures 1 et 2 et l'entrefer E est protégé par le système d'étanchéité du roulement qui met en oeuvre un joint à lèvres axiale 13 et radiales 14, 15 en appui sur l'anneau 17, porteur de l'élément capteur 18.

## Revendications

1°) Joint détanchéité annulaire tournant à codeur magnétique intégré, notamment pour des roulements à capteurs d'informations du type comportant une garniture (8) à lèvres d'étanchéité, surmoulée sur un anneau (7) et en appui sur un autre anneau (17), lesdits anneaux étant chacun munis d'une portée cylindrique de montage et avec lesquels sont respectivement solidarisés un élément annulaire codeur (20) et un élément capteur (18), caractérisé par le fait que l'élément codeur (20) possède des ergots (21) répartis circonférentiellement sur une surface cylindrique constitutive de l'élément codeur (20), les ergots présentant un premier flanc (25, 27) s'étendant radialement, ou flanc radial, et un deuxième flanc incliné, et par le fait que l'immobilisation et le positionnement axial de l'élément codeur (20) sont réalisés dans un sens axial par une surface de butée (23) s'étendant radialement, portée par la garniture (8), et par une surface de butée (26) s'étendant radialement, portée par l'élément codeur (20), les deux surfaces (23, 26) étant tournées l'une vers l'autre, l'immobilisation et le positionnement axial de l'élément codeur (20) dans l'autre sens axial ainsi que le maintien angulaire et radial étant assurés par lesdits ergots (21) implantés élastiquement dans une portée cylindrique (24) de la garniture (8) à l'aide des flancs radiaux (25, 27) de ces ergots (21), lesdits flancs radiaux (25, 27) étant axialement éloignés des dites surfaces de butée radiale (23, 26).

2°) Joint d'étanchéité tournant selon la revendication 1, caractérisé par le fait que les ergots (21) de retenue de l'élément codeur (20) sont répartis circonférentiellement à la périphérie de l'anneau (22) constitutif de l'élément codeur.

3°) Joint détanchéité tournant selon la revendication 1, caractérisé par le fait que les ergots de retenue (21) de l'élément codeur (20) sont répartis circonférentiellement à l'intérieur de l'anneau (22) constitutif de l'élément codeur.

4°) Joint d'étanchéité tournant selon l'une quelconque des revendications 1 à 3, caractérisé par le fait que les ergots (21) de retenue de l'élément codeur (20) sont encastrés dans la garniture d'étanchéité (8), pour permettre à cette dernière d'assurer par élasticité le rattrapage des jeux et serrages radiaux de l'élément codeur (20) dans son logement ainsi que l'amortissement des chocs et vibrations susceptibles de désolidariser le codeur de la garniture.

5°) Joint d'étanchéité selon l'une quelconque des revendications 1 à 4, caractérisé par le fait que l'élément capteur (18) est encastré dans la face externe d'un anneau (17) de montage recevant l'appui des lèvres (9, 10 ; 13, 14, 15) d'étanchéité de la garniture (8) surmoulée sur un autre anneau (7) de montage.

6°) Joint d'étanchéité selon l'une quelconque des revendications 1 à 5, caractérisé par le fait qu'il est monté dans un roulement de roue d'un véhicule.

7°) Joint d'étanchéité selon l'une quelconque des revendications 1 à 6, caractérisé par le fait que l'élément capteur (18) et son câble (19) d'alimentation sont rapportés par accrochage sur la face externe de l'anneau (17) de montage.

## Patentansprüche

1. Ringförmige, sich drehende Dichtung, mit integriertem magnetischen Kodierer, insbesondere für Wälzlager mit Meßwertgeber, mit einem Lippendichtsatz (8), der auf einem Ring (7) aufgebracht ist und sich auf einem anderen Ring (17) abstützt, wobei diese Ringe jeweils mit einer zylindrischen Montageöffnung versehen sind, die fest mit einem ringförmigen Kodierteil (20) bzw. einem Geberteil (18) verbunden sind, dadurch gekennzeichnet, daß das-Kodierteil (20) Vorsprünge (21) aufweist, die entlang des Umfangs auf einer zylindrischen, das Kodierteil bildenden Fläche verteilt sind und die eine erste sich radial erstreckende Wand (25, 27) oder Radialwand aufweisen und eine zweite geneigte Wand aufweisen, und dadurch, daß die Festlegung und die axiale Ausrichtung des Kodierteils (20) in der einen Axialrichtung durch eine sich radial erstreckende Anschlagfläche (23) erfolgt, die von dem Satz (8) getragen wird sowie durch eine sich radial erstreckende Anschlagfläche (26) erfolgt, die vom Kodierteil (20) getragen wird, wobei die beiden Flächen (23, 26) eineinander zugewandt sind, wohingegen die Festlegung und die axiale Ausrichtung des Kodierteils (20) in der anderen Axialrichtung sowie seine winkelmäßige und radiale Festlegung durch die Vorsprünge (21) gewährleistet werden, welche elastisch in eine zylindrische Öffnung (24) des Satzes (8) mittels der Radialwände (25, 27) dieser Vorsprünge (21) eingesetzt sind, während die Radialwände (25, 27) axial entfernt sind von den genannten radialen Anschlagflächen (23, 26).

2. Drehende Dichtung nach Anspruch 1, dadurch gekennzeichnet, daß die Vorsprünge (21) zum Festhalten des Kodierteils (20) entlang des Außenumfangs des das Kodierteil bildenden Ringes (22) verteilt sind.

3. Drehende Dichtung nach Anspruch 1, dadurch gekennzeichnet, daß die Vorsprünge (21) zum Festhalten des Kodierteils (20) entlang des Innenumfangs des das Kodierteils bildenden Ringes (22) verteilt sind.

4. Drehende Dichtung nach einem der Ansprüche 1 bis 3, dadurch gekennzeichnet, daß die Vorsprünge (21) zum Festhalten des Kodierteils (20) in den Dichtsatz (8) eingesetzt sind, um letzterem zu ermöglichen durch seine Elastizität einen Ausgleich des radialen Spiels und der Klemmwirkung des Kodierteils (20) in seinem Sitz zu gewährleisten sowie ein Dämpfen der Stöße und Schwingungen, die zu einer Abtrennung des Kodierteils vom Satz führen könnten.

5. Drehende Dichtung nach einem der Ansprüche 1 bis 4, dadurch gekennzeichnet, daß das Geberteil (18) in die Außenfläche eines Montageringes (17) eingesetzt ist, auf dem sich die Dichtlippen (9, 10, 13, 14, 15) des auf einem anderen Montagering (7) aufgebrachten Satzes (8) abstützen.

6. Drehende Dichtung nach einem der Ansprüche 1 bis 5, dadurch gekennzeichnet, daß sie in einem Kraftfahrzeugradlager angeordnet ist.

7. Drehende Dichtung nach einem der Ansprüche 1 bis 6, dadurch gekennzeichnet, daß das Geberteil (18) und sein Versorgungskabel (19) durch Anhaken an die Außenfläche des Montagerings (17) angenähert sind.

## Claims

1. A rotary annular sealing joint with an integrated magnetic encoder, in particular for bearings with information sensors of the type comprising a gasket (8) with sealing lips duplicate moulded on a ring (7) and bearing on a further ring (17), these rings each being provided with a cylindrical assembly seat and with which an annular encoder member (20) and a sensor member (18) are respectively rigid, characterized in that the encoder member (20) comprises lugs (21) distributed peripherally over a cylindrical surface forming the encoder member (20), the lugs having a first flank (25, 27) extending radially, or radial flank, and a second inclined flank, in that the immobilization and axial positioning of the encoder member (20) are carried out in an axial direction by a radially extending stop surface (23) borne by the gasket (8) and by a radially extending stop surface (26) borne by the encoder member (20), these two surfaces (23, 26) facing one another, the immobilization and axial positioning of the encoder member (20) in the other axial direction and angular and radial retention being assured by the lugs (21) fitted elastically in a cylindrical seat (24) of the gasket (8) by means of the radial flanks (25, 27) of these lugs (21), these radial flanks (25, 27) being axially remote from the radial stop surfaces (23, 26).

2. A rotary sealing joint as claimed in claim 1, characterized in that the lugs (21) retaining the encoder member (20) are distributed peripherally about the periphery of the ring (22) forming the encoder member.

3. A rotary sealing joint as claimed in claim 1, characterized in that the lugs (21) retaining the encoder member (20) are distributed peripherally within the ring (22) forming the encoder member.

4. A rotary sealing joint as claimed in any one of claims 1 to 3, characterized in that the lugs (21) retaining the encoder member (20) are fitted in the sealing gasket (8) to allow the latter to take up, through its elasticity, the radial play and gripping of the encoder member (20) in its housing and the absorption of impacts and vibrations likely to disconnect the encoder from the gasket.

5. A sealing joint as claimed in any one of claims 1 to 4, characterized in that the sensor member (18) is fitted in the outer surface of an assembly ring (17) borne on by the sealing lips (9, 10; 13, 14, 15) of the gasket (8) duplicate moulded on a further assembly ring (7).

6. A sealing joint as claimed in any one of claims 1 to 5, characterized in that it is mounted in a wheel bearing of a vehicle.

7. A sealing joint as claimed in any one of claims 1 to 6, characterized in that the sensor member (18) and its supply cable (19) are connected by hooking on the outer surface of the assembly ring (17).

FIGURE 1

FIGURE 2

FIGURE 3

FIGURE 4

FIGURE 5

FIGURE 6